Europäisches Patentamt

European Patent Office

Office européen des brevets

(11) Veröffentlichungsnummer: **0 013 731**
**A1**

(19)

(12) # EUROPÄISCHE PATENTANMELDUNG

(21) Anmeldenummer: **79105085.9**

(22) Anmeldetag: **11.12.79**

(51) Int. Cl.³: **C 08 J 9/36,** C 08 J 9/42, C 09 J 5/00

(30) Priorität: **19.01.79 DE 2902149**

(43) Veröffentlichungstag der Anmeldung: **06.08.80** Patentblatt 80/16

(84) Benannte Vertragsstaaten: **AT BE CH FR GB IT NL SE**

(71) Anmelder: **METZELER SCHAUM GMBH, Donaustrasse 51, D-8940 Memmingen (DE)**

(72) Erfinder: **Bokelmann, Horst, Richard-Kirchner-Strasse 24, D-3590 Bad Wildungen (DE)**
Erfinder: **Patzelt, Heinz Wolfgang, Dr., Buxacher Strasse 73, D-8940 Memmingen (DE)**

(74) Vertreter: **Michells, Theodor, Dipl.-Ing., Westendstrasse 131, D-8000 München 2 (DE)**

(54) **Haftkleberbeschichtetes, dreidimensional geformtes Flächenbauteil und Verfahren sowie Vorrichtung zu seiner Herstellung.**

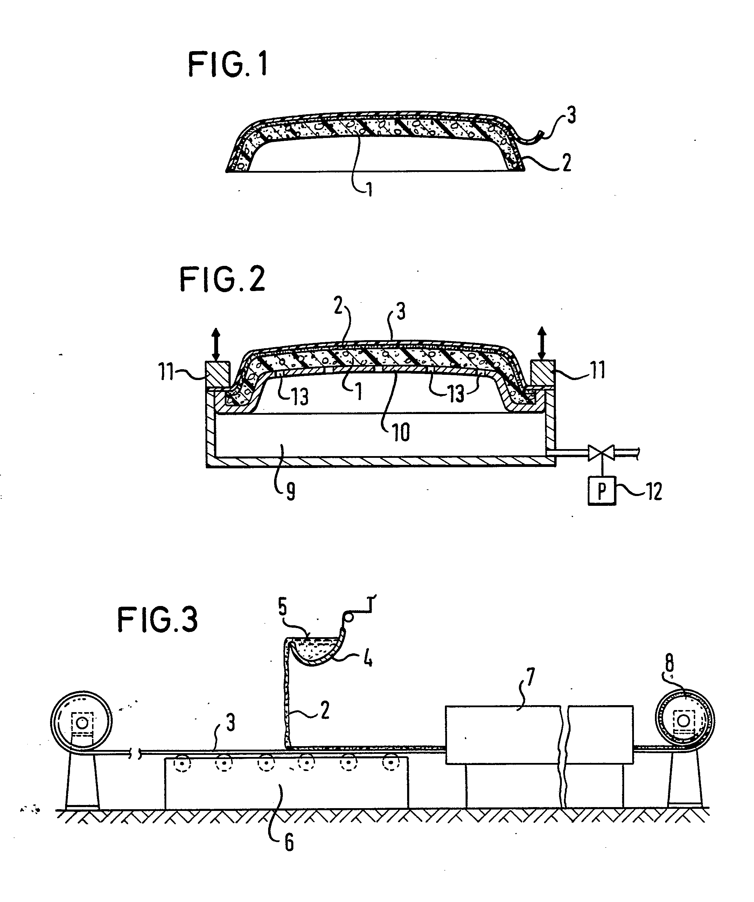

(57) Dreidimensional geformte Flächenbauteile aus PUR-Weichschaum werden vor dem Ein- oder Zusammenbau mit einer gleichmäßigen und porenüberdeckenden Haftkleberschicht versehen, die ihrerseits mit einer Trennfolie abgedeckt ist, wobei die Haftkleberschicht zur Trennfolie eine deutlich geringere Adhäsion als zum Flächenbauteil aufweist. Zweckmäßigerweise wird die Haftkleberschicht zunächst auf die Trennfolie aufgebracht und dann mit dieser auf die Flächenbauteile aufgeklebt (Fig. 1)

EP 0 013 731 A1

METZELER SCHAUM GmbH                    17.1.1979

Memmingen                    𝒜


## Patentanmeldung


### Haftkleberbeschichtetes, dreidimensional geformtes Flächenbauteil und Verfahren sowie Vorrichtung zu seiner Herstellung

Die Erfindung betrifft ein dreidimensional geformtes, mit einer Haftkleberschicht versehenes, poröses Flächenbauteil, vorzugsweise PUR-Weichschaum-Bauteil, sowie ein Verfahren und eine Vorrichtung zu seiner Herstellung.

Derartige Weichschaumteile werden häufig zu größeren und komplizierter geformten Bauteilen zusammengeklebt; auch werden sie häufig als stoßenergieverzehrende Dämpfelemente im Karosseriebau verwendet. Im letzteren Falle richtet sich die Form des Schaumstoff-Bauteiles nach der Form des Karosseriebleches, an das es angeklebt werden soll. Zur Herstellung einer dauerhaften Klebeverbindung wird üblicherweise ein wässriger Dispersions-Haftkleber verwendet, der nicht aushärtet, sondern eine dauernde Klebewirkung aufweist.

Vor dem Ankleben muß das Schaumstoff-Bauteil mit einer Haftkleberschicht versehen werden. Dies geschieht üblicherweise durch Aufsprühen des Haftklebers mittels einer Sprühpistole. Dieses Verfahren ist jedoch sehr aufwendig und die Menge des vorbeigesprühten Klebers erheblich. Außerdem werden sämtliche Poren des Schaumstoffes benetzt und die tatsächlich besprühte Oberfläche ist wesentlich größer als es zum Ankleben eigentlich erforderlich wäre. Eine andere gebräuchliche Methode ist es, den Haftkleber über einen waagerechten Gießbalken auf das Schaumstoff-Bauteil aufzugießen. Diese Methode führt jedoch nur bei ebenen Bauteilen zu befriedigenden Ergebnissen. Bei dreidimensional geformten Bauteilen ist die Fallzeit des herabfließenden Klebers punktuell unterschiedlich, wodurch es zu unterschiedlichen Stärken der aufgebrachten Kleberschicht oder - an den höchsten Stellen des Flächenbauteiles - zum Abriß des Kleberfilmes kommt. Auch bei dieser Methode werden sämtliche Poren mit dem Haftkleber gefüllt und der Kleberverbrauch ist wesentlich größer als er zum Ankleben des Flächenbauteiles erforderlich wäre.

Aufgabe der vorliegenden Erfindung ist es, ein dreidimensional geformtes Schaumstoff-Flächenbauteil mit einer möglichst gleichmäßigen Haftkleberschicht zu schaffen, dessen Poren nicht unnötigerweise mit Haftkleber benetzt sind, sowie ein Verfahren zur Herstellung eines mit einer gleichmäßigen Haftkleberschicht versehenen, dreidimensional geformten Schaumstoff-Flächenbauteiles zur Verfügung zu stellen, das einen möglichst sparsamen Haftkleberverbrauch gewährleistet, sowie eine Vorrichtung zu schaffen, mit der das genannte Verfahren durchgeführt werden kann und mit dem unter geringstem Aufwand nur soviel Haftkleber verarbeitet wird, wie zur Beschichtung des dreidimensional geformten Schaumstoff-Bauteils erforderlich ist.

Gelöst wird diese Aufgabe dadurch, daß die Haftkleberschicht gleichmäßig und porenüberdeckend aufgetragen ist, wobei die Haftkleberschicht aus einem wässrigen Dispersionskleber besteht und eine Stärke von ca. 100 bis 600 g/m$^2$ aufweist. Eine Ausgestaltung der Erfindung sieht vor, daß die Haftkleberschicht für Transport und Lagerung mit einer ihr angepaßten Trennfolie abgedeckt ist, wobei die Adhäsion der Haftkleberschicht zur Trennfolie deutlich geringer ist als zu dem Flächenbauteil. Durch diese Maßnahmen wird ein dreidimensional geformtes Flächenbauteil geschaffen, das mit einem Minimum von Haftkleber versehen ist und dessen weitere Verarbeitung durch einfaches Ankleben an seinen Gebrauchsplatz eine gute und dauerhafte Klebeverbindung gewährleistet.

Die Herstellung eines solchen dreidimensional geformten Schaumstoff-Flächenbauteils geschieht durch die folgenden Verfahrensschritte:

a) die Haftkleberschicht wird auf eine Trennfolie aufgebracht und darauf getrocknet;

b) die mit der angetrockneten Haftkleberschicht versehene
   Trennfolie wird mit der Haftkleberschicht auf das zu
   beschichtende Flächenbauteil aufgebracht;

c) an das mit der haftkleberbeschichteten Trennfolie überdeckte Flächenbauteil wird ein Vakuum angelegt.

Zur Ausgestaltung dieses Verfahrens ist vorgesehen, daß die
Trennfolie mit gleichmäßiger Geschwindigkeit unter einer Haftkleber-Gießanlage, beispielsweise einem Gießbalken hindurchgeführt und der Haftkleber in gleichmäßiger Menge auf die unter
dem Gießbalken hindurchgeführte Trennfolie gegossen wird, wobei
die Haftkleberschicht in einer Stärke von ca. 100 bis 600 g/m$^2$
aufgegossen wird und die Haftkleberschicht nach dem Auftrag auf
die Trennfolie in einem Heizkanal bei ca. 60 bis 90 $^o$C getrocknet wird.

Eine andere Ausführungsform des genannten Verfahrens beinhaltet
die folgenden Verfahrensschritte:

a) die Haftkleberschicht wird auf eine Trennfolie aufgebracht und darauf getrocknet;

b) die mit der Haftkleberschicht versehene Trennfolie wird
   erwärmt und mit der Haftkleberschicht auf das zu beschichtende Flächenbauteil aufgebracht;

c) an das mit der haftkleberbeschichteten Trennfolie überdeckte Flächenbauteil wird ein Vakuum angelegt.

Die Ausgestaltung dieses Verfahrens sieht vor, daß die haftkleberbeschichtete Trennfolie vor dem Aufbringen auf das zu beschichtende Flächenbauteil auf ca. 60 bis 90 $^o$ erwärmt wird.
Durch dieses Verfahren wird ein dreidimensional geformtes
Schaumstoff-Flächenbauteil zur Verfügung gestellt, das mit einer
gleichmäßigen, porenüberdeckenden Haftkleberschicht versehen
ist. Die Poren des Schaumstoff-Bauteiles werden nicht mit Haftkleber benetzt, die tatsächlich überdeckte Oberfläche entspricht
in etwa der zu beschichtenden Oberfläche des Flächenbauteiles,
wodurch ein äußerst sparsamer Haftkleberverbrauch erzielt wird.

Die Aufgabe, eine Vorrichtung zur Durchführung des erfindungsgemäßen Verfahrens zur Verfügung zu stellen, wird gelöst durch

- einen ebenen Gießbalken, an dem ein konstanter Oberflächenspiegel herrscht;
- eine ebene Führungsbahn zur Führung der Trennfolie unter dem Gießbalken hindurch;
- einen Heizkanal zum Antrocknen der auf die Trennfolie aufgegossenen Haftkleberschicht;
- eine der Trennfolie eine gleichmäßige Geschwindigkeit verleihende Antriebsvorrichtung.

Durch diese Maßnahmen wird eine gleichmäßig starke Haftkleberschicht erzeugt, die mittels eines Vakuums auf das zu beschichtende dreidimensional geformte Schaumstoff-Flächenbauteil aufgebracht werden kann. Die Erfindung, soweit sie das Schaumstoff-Flächenbauteil und die Vorrichtung zur Beschichtung eines solchen Bauteiles betrifft, ist in der beiliegenden Zeichnung schematisch dargestellt und wird nachfolgend näher beschrieben. Die Figuren zeigen im einzelnen:

Fig. 1 ein mit einer Haftkleberschicht versehenes, dreidimensional geformtes Schaumstoff- Flächenbauteil;

Fig. 2 eine Vorrichtung zum Aufbringen der Haftkleberschicht auf ein dreidimensional geformtes Schaumstoff-Flächenbauteil nach Fig. 1;

Fig. 3 eine Vorrichtung zum Aufbringen einer gleichmäßigen Haftkleberschicht auf eine bei der Vorrichtung nach Fig. 2 zu verwendende Trennfolie.

Das in der Figur 1 dargestellte Flächenbauteil 1 ist mit einer gleichmäßig starken, porenüberdeckenden Haftkleberschicht 2 versehen. Diese Haftkleberschicht wird zur Lagerung und zum Transport durch eine Trennfolie 3 abgedeckt. Die Trennfolie wird vor dem Einbau des Schaumstoff-Flächenbauteiles abgezogen, wobei die Adhäsion der Haftkleberschicht 2 gegenüber der Trennfolie 3 wesentlich geringer ist als gegenüber dem Flächenbauteil 1. Der-

0013731

artige Flächenbauteile werden beispielsweise als stoßenergieverzehrende Polsterungen an Karosserieteilen, beispielsweise
einem Kraftfahrzeugschiebedach, verwendet. Sie dienen der Sicherheit und werden zum Einbau einfach angeklebt, nachdem die Trennfolie abgezogen ist, wie dies in der Figur durch die teilweise
abgezogen dargestellte Trennfolie 3 zum Ausdruck gebracht ist.

Die Haftkleberschicht 2 wird mittels einer in Fig. 2 schematisch
dargestellten Vakuumkammer 9 auf das Flächenbauteil 1 aufgebracht. Das Flächenbauteil 1 wird dazu auf ein Vakuumwerkzeug
10 gelegt und mit der heftkleberbeschichteten Trennfolie 3 überdeckt. Die Trennfolie 3 kann dabei beispielsweise durch auf- und
abfahrbare Niederhalter 11 in ihrer Lage gehalten werden. In der
Vakuumkammer 9 wird mittels einer Vakuumpumpe 12 ein Vakuum erzeugt, welches sich durch Bohrungen 13 in dem Vakuumwerkzeug 10
auf das Flächenbauteil 1 ausbreitet. Da die Niederhalter 11 die
luftundurchlässige Trennfolie 3 luftdicht mit der Vakuumkammer 9
verbindet, wird die Trennfolie 3 und die auf ihr aufgebrachte
Haftkleberschicht 2 fest gegen die Oberfläche des Flächenbauteils
1 gesogen. Die Haftkleberschicht 2 besteht aus einem angetrockneten, permanent klebenden Haftkleber, der eine hohe Adhäsion
zu dem Schaumstoff des Flächenbauteiles 1 aufweist. Unter dem
Atmosphärischen Luftdruck entsteht eine feste und dauerhafte
Klebeverbindung zwischen der Haftkleberschicht 2 und dem Flächenbauteil 1. Da die Haftkleberschicht 2 bereits auf der Trennfolie
3 angetrocknet ist, kann sie nicht mehr in die Poren des Schaumstoffs eindringen, die Poren werden klebstoffsparend überdeckt.
Die Trennfolie 3 kann zur besseren Anpassung an die Form des
Schaumstoff-Flächenbauteiles 1 vor ihrem Aufbringen auf ca. 60
bis 90 $^{o}$ erwärmt werden, die Folie wird dabei sehr geschmeidig
und läßt sich sehr leicht verformen. Als Folie ist eine thermoplastische Polyäthylen-Folie, eine PVC-Folie oder eine Silikonpapierfolie vorgesehen. Derartige Folien haben eine recht geringe Adhäsion zu dem Haftkleber und lassen sich nach der Verarbeitung leicht abziehen.

Eine Vorrichtung zum Aufbringen der Haftkleberschicht 2 auf die
Trennfolie 3 ist in der Fig. 3 dargestellt. Der Haftkleber wird
in einem als Rinne dargestellten Gießbalken 4 mittels einer

6

nicht gezeigten Umwälzpumpe auf konstantem Oberflächenspiegel 5 gehalten. Über den vollkommen waagerecht gehaltenen Gießbalken 4 fließt der Haftkleber in einem gleichmäßig starken Film auf die unter ihm hindurch geführte Trennfolie 3. Die Trennfolie 3 wird dabei mit einer gleichmäßigen, der Menge des herabfließenden Haftklebers angepaßten Geschwindigkeit unter dem Gießbalken auf einer ebenen Führungsbahn 6 hindurchgeführt. Vorbeifließender Haftkleber wird durch die genannte, nicht gezeigte Umwälzpumpe wieder in den Gießbalken 4 befördert. Der Haftkleber besteht aus einer wässrigen Dispersion, der in einer Menge von ca. 100 bis 600 g/m$^2$ auf die unter ihm hindurch geführte Trennfolie 3 gegossen und in einem sich anschließenden Heizkanal 7 getrocknet wird. An den Heizkanal 7 schließt sich eine Antriebsvorrichtung 8, beispielsweise in Form eines Haspelzuges, an, der zugleich die Trennfolie 3 aufrollt. Dabei ist zu beachten, daß durch die sich aufrollende Trennfolie-Haftkleberschicht hervorgerufene Durchmesservergrößerung keine Beschleunigung der Trennfolie bewirkt wird. Hinter dem Heizkanal 7 kann auch eine Schneidevorrichtung vorgesehen sein, die die haftkleberbeschichtete Trennfolie in für die Weiterverarbeitung abgemessene Stücke zerschneidet. Die aus dem Heizkanal 7 mit einer Temperatur von 60 bis 90 $^o$C herauskommende Trennfolie 3 ist sehr weich und geschmeidig und kann zur sofortigen Weiterverarbeitung weitergeleitet werden.

MS 132 P 79

0013731

METZELER SCHAUM GmbH
Memmingen

Patentansprüche

1. Dreidimensional geformtes, mit einer Haftkleberschicht versehenes, poröses Flächenbauteil, vorzugsweise PUR-Weichschaum-
Bauteil, d a d u r c h   g e k e n n z e i c h n e t ,   daß
die Haftkleberschicht (2) gleichmäßig und porenüberdeckend ausgebildet ist.

2. Flächenbauteil nach Anspruch 1, dadurch gekennzeichnet, daß
die Haftkleberschicht (2) aus einem wässrigen Dispersionskleber
besteht und in einer Stärke von ca. 100 bis 600 g/m$^2$ aufweist.

3. Flächenbauteil nach den Ansprüchen 1 und 2, dadurch gekennzeichnet, daß die Haftkleberschicht (2) für Transport und Lagerung mit einer ihr angepaßten Trennfolie (2) abgedeckt ist, wobei
die Adhäsion der Haftkleberschicht (2) zur Trennfolie (3) deutlich geringer ist, als zu dem Flächenbauteil (1).

4. Verfahren zur Herstellung eines dreidimensional geformten,
mit einer Haftkleberschicht versehenen, porösen Flächenbauteils,
vorzugsweise PUR-Weichschaumteils nach den Ansprüchen 1 bis 3,
gekennzeichnet durch die folgenden Verfahrensschritte:

   a) die Haftkleberschicht wird auf eine Trennfolie aufgebracht und darauf getrocknet;
   b) die mit der angetrockneten Haftkleberschicht versehene
      Trennfolie wird mit der Haftkleberschicht auf das zu
      beschichtende Flächenbauteil aufgebracht;
   c) an das mit der haftkleberbeschichteten Trennfolie überdeckte Flächenbauteil wird ein Vakuum angelegt.

5. Verfahren zur Herstellung eines dreidimensional geformten,
mit einer Haftkleberschicht versehenen, porösen Flächenbauteils,

(MS 115 E 78)

vorzugsweise PUR-Weichschaumteiles, nach den Ansprüchen 1 bis 3, gekennzeichnet durch die folgenden Verfahrensschritte:

a) die Haftkleberschicht wird auf eine Trennfolie aufgebracht und darauf getrocknet;

b) die mit der Haftkleberschicht versehene Trennfolie wird erwärmt und mit der Haftkleberschicht auf das zu beschichtende Flächenbauteil aufgebracht;

c) an das mit der haftkleberbeschichteten Trennfolie überdeckte Flächenbauteil wird ein Vakuum angelegt.

6. Verfahren nach Anspruch 4, dadurch gekennzeichnet, daß die Trennfolie mit gleichmäßiger Geschwindigkeit unter einer Haftkleber-Gießanlage, beispielsweise einem Gießbalken, hindurchgeführt und der Haftkleber in gleichmäßiger Menge auf die unter dem Gießbalken hindurch geführte Trennfolie gegossen wird.

7. Verfahren nach Anspruch 6, dadurch gekennzeichnet, daß die Haftkleberschicht in einer Stärke von ca. 100 bis 600 $g/m^2$ aufgegossen wird.

8. Verfahren nach den Ansprüchen 4, 6 und 7, dadurch gekennzeichnet, daß die Haftkleberschicht nach dem Auftrag auf die Trennfolie in einem Heizkanal bei ca. 60 bis 90 $^\circ$C getrocknet wird.

9. Verfahren nach Anspruch 5, dadurch gekennzeichnet, daß die haftkleberbeschichtete Trennfolie vor dem Aufbringen auf das zu beschichtende Flächenbauteil auf ca. 60 bis 90 $^\circ$C erwärmt wird.

10. Vorrichtung zur Herstellung einer haftkleberbeschichteten Trennfolie zur Verwendung bei einem Verfahren nach den Ansprüchen 4 und/oder 5, gekennzeichnet durch

- einen ebenen Gießbalken (4), an dem ein konstanter Oberflächenspiegel (5) herrscht;

- eine ebene Führungsbahn (6) zur Führung der Trennfolie (3);

- einen Heizkanal (7) zum Antrocknen der aufgegossenen Haftkleberschicht (2);

- eine der Trennfolie (3) eine gleichmäßige Geschwindigkeit verleihende Antriebsvorrichtung (8).

FIG.1

FIG.2

FIG.3

Europäisches Patentamt

EUROPÄISCHER RECHERCHENBERICHT

0013731

EP 79 10 5085

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | C 08 J 9/36 |
| | DE - A - 2 125 557 (JOHNSON & JOHNSON) | 1 | 9/42 |
| | * Ansprüche 1,3,16,17 * | | C 09 J 5/00 |
| | -- | | |
| A | DE - A - 1 919 838 (KUNEVICIUS A.) | | |
| A | DD - A - 65 989 (WIEDECK W.) | | |
| A | CHEMICAL ABSTRACTS, Band 70, Nr. 18, 21. April 1969, Zusammenfassung Nr. 78896m, Seite 52, Columbus, Ohio, US, | | RECHERCHIERTE SACHGEBIETE (Int. Cl. ³) |
| | & ZA - A - 6 802 179 (HIGGS M.W. et al. | | C 08 J 9/36 |
| | -- | | 9/42 |
| A | DE - A - 2 603 013 (BISSCHOP J.R. et al.) | | B 05 D 1/30 7/02 |
| A | FR - A - 2 286 869 (UNITECH CHEMI-CAL INC.) | | C 09 J 5/00 B 60 R 21/04 |
| A | GB - A - 1 204 128 (THE SCHOLL MFG CO. LTD.) | | 13/02 |
| | ---- | | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-04-1980 | CECCHINI |

EPA form 1503.1 06.78